# EUROPÄISCHE PATENTSCHRIFT

(11) **EP 3 991 614 B1**
(45) Veröffentlichungstag und Bekanntmachung des Hinweises auf die Patenterteilung: **25.12.2024**
(21) Anmeldenummer: 21202696.7
(22) Anmeldetag: 14.10.2021
(51) Int. Cl.: A47J 31/40

(54) **VORRICHTUNG ZUR ABGABE EINES RIESELFÄHIGEN PRODUKTS FÜR ODER IN EINEM GETRÄNKEZUBEREITUNGSAUTOMAT, GETRÄNKEZUBEREITUNGSAUTOMAT**
DEVICE FOR DISPENSING A GRANULAR PRODUCT FOR OR IN A BEVERAGE PREPARATION MACHINE, AND BEVERAGE MAKING MACHINE
DISPOSITIF DE DISTRIBUTION D'UN PRODUIT GRANULAIRE POUR OU DANS UN DISPOSITIF AUTOMATIQUE DE PRÉPARATION DE BOISSONS, DISPOSITIF AUTOMATIQUE DE PRÉPARATION DE BOISSONS

(30) Priorität: 16.10.2020 DE 102020213083
(43) Veröffentlichungstag der Anmeldung: 04.05.2022
(73) Patentinhaber: Sielaff GmbH & Co. KG Automatenbau Herrieden, 91567 Herrrieden (DE)
(72) Erfinder: MOLL, Stefan, 91578 Leutershausen (DE); ZELLER, Gerhard, 91589 Aurach (DE)
(74) Vertreter: Isarpatent

(56) Entgegenhaltungen:
- EP-A1- 2 257 205
- EP-B1- 2 293 708
- US-A1- 2010 199 850

## Beschreibung

### GEBIET DER ERFINDUNG

Die vorliegende Erfindung betrifft eine Vorrichtung zur Abgabe eines rieselfähigen Produkts für oder in einem Getränkezubereitungsautomaten. Des Weiteren betrifft die Erfindung einen Getränkezubereitungsautomat.

### TECHNISCHER HINTERGRUND

Vorrichtungen zur Abgabe eines rieselfähigen Produkts werden in Getränkezubereitungsautomat beispielsweise zur Zuführung eines Süßungsmittels wie Zucker bzw. Trockenzucker eingesetzt. Beispielsweise kann während, vor oder nach einer Abgabe eines Heiß- oder Kaltgetränks in einen Getränkebehälter Zucker durch die Vorrichtung zugeführt werden, um unterschiedliche Süßungsgrade des Getränks zu erreichen. Bei dem Getränkezubereitungsautomat kann es sich um einen Automat zur Zubereitung von Softdrinks oder ähnlichem handeln, wobei beispielsweise ein Aromapulver mit einer Flüssigkeitsmenge vermischt werden kann. Bei dem Heißgetränk kann es sich um jede Art eines Kaffees oder Tees handeln. Andere Heißgetränke sind ebenso denkbar. Folglich kann es sich bei dem Heißgetränkeautomat um einen Kaffeeautomaten, Kaffeevollautomaten oder Ähnliches handeln.

Die DE 10 2017 128 087 A1 zeigt einen Kaffeeautomat mit einer Brühkammer und einem Vorratsbehälter zum Bereithalten von Kaffeebohnen. Über einen Schacht kann eine weitere rieselfähige Trockensubstanz, wie beispielsweise Zucker, in die Brühkammer zugeführt werden. Der Schacht ist beispielsweise trichterförmig ausgebildet und kann über eine Einfüllöffnung manuell oder automatisch gesteuert befüllt werden. Zum Reinigen kann der Schacht aus dem Kaffeeautomaten entnommen werden.

Nachteilig ist bei derartigen Kaffeeautomaten, dass der Schacht zur Zuführung des rieselfähigen Trockensubstrats, wie Zucker, leicht verschmutzt und bisweilen sogar verstopft, da dieser im Bereich des ansteigenden heißen Dampfes aus dem Heißgetränk angeordnet ist, wenn das Heißgetränk in den Getränkebehälter eingefüllt wird. Der heiße Dampf kondensiert im und/oder am Schacht und führt regelmäßig zu unhygienischen Rückständen. Diese Rückstände können in ein darauffolgendes Getränk gelangen, den Schacht verstopfen und zu Geschmacksveränderungen führen.

Bei einer Zubereitung von Kaltgetränken in einem Getränkezubereitungsautomat kann ebenso durch die aufsteigende Feuchtigkeit, beispielsweise einer kohlensäurehaltigen Flüssigkeit, Feuchtigkeit in den Schacht gelangen, der beispielsweise zur Zuführung eines Aromapulvers dient.

US 2010/199850 A1 zeigt eine Getränkemischvorrichtung mit einem Vorratsbehälter 5 und einer Mischkammer 2. Über ein Zuführelement 2 wird die Mischkammer befüllt. Das Zuführelement 7 kann dabei geschwenkt werden.

Weiterhin erfolgt die Abgabe von Süßungsmitteln, wie beispielsweise Trockenzucker oder Aromapulver, häufig durch Vibration, um das Produkt aus einem Vorratsbehälter herausbefördert. Nachteilig kann das Süßungsmittel auch nach Abgabe einer gewünschten Produktionsmenge nachrieseln, wodurch ebenso Verunreinigungen bzw. Rückstände entstehen.

Eine Reinigung ist zwar nach Herausnahme des Zuführschachts aus dem Getränkezubereitungsautomat möglich. Dies erfordert jedoch den Ausbau und eine regelmäßige Kontrolle des Verschmutzungsgrads des Zuführschachts. Der Wartungs- sowie Reinigungsaufwand bekannter Getränkezubereitungsautomaten ist daher zeit- und somit auch kostenintensiv.

Dies ist ein Umstand, den es zu vermeiden gilt.

### ZUSAMMENFASSUNG DER ERFINDUNG

Vor diesem Hintergrund liegt der vorliegenden Erfindung die Aufgabe zugrunde, eine verbesserte Vorrichtung zur Abgabe eines rieselfähigen Produkts sowie einen Getränkezubereitungsautomat mit einer entsprechenden Vorrichtung anzugeben. Erfindungsgemäß wird diese Aufgabe durch eine Vorrichtung mit den Merkmalen des Patentanspruchs 1 und/oder durch einen Getränkezubereitungsautomat mit den Merkmalen des Patentanspruchs 14 gelöst.

Demgemäß ist vorgesehen:
- Eine Vorrichtung zur Abgabe eines rieselfähigen Produkts für oder in einem Getränkezubereitungsautomaten, mit einem Vorratsbehälter zur Lagerung des rieselfähigen Produkts, mit einer Dosiereinrichtung zur Dosierung des rieselfähigen Produkts, und einem bewegbaren Abgabeelement zur Abgabe des rieselfähigen Produkts in einen Getränkebehälter, wobei das Abgabeelement von einer Abgabeposition in eine Warteposition oder Ruheposition bewegbar ist, und die Warteposition bzw. die Ruheposition zumindest in horizontaler Richtung versetzt zur Abgabeposition positioniert ist, und mit einem bewegbaren Positionierungselement, dessen Positionsveränderung eine Veränderung der Position des beweglichen Abgabeelements bewirkt, wobei das Positionierungselement ein Ausgabeelement umfasst, das zur Ausgabe einer Flüssigkeit dient.
- Ein Getränkezubereitungsautomat, insbesondere Heißgetränkezubereitungsautomat, umfassend eine erfindungsgemäße Vorrichtung.

Die der vorliegenden Erfindung zugrundeliegende Erkenntnis besteht darin, dass eine Bildung von Kondensat im Abgabeelement vermieden werden soll.

Die der vorliegenden Erfindung zugrundeliegende Idee besteht darin, dass das Abgabeelement beweglich ausgebildet ist, und aus einem Bereich wegbewegt werden kann, in welchen heißer Dampf aus einer Heißgetränkeherstellung oder Feuchtigkeit aus einer Kaltgetränkeherstellung aufsteigt.

Auf diese Weise ist es vorteilhaft möglich, eine Kondensation im Abgabeelement, und damit in einem Schacht, durch aufsteigende Feuchtigkeit bzw. aufsteigenden heißen Dampf während der Getränkezubereitung zu verhindern oder deutlich zu reduzieren. Weiterhin kann eine verstärkte Anhaftung und damit ein Verstopfen des Abgabeelements behindert werden. Vorteilhafterweise sind daher alle beweglichen Elemente, insbesondere das Abgabeelement, leicht zu reinigen, da eine verstärkte Anhaftung vermieden wird.

Darüber hinaus kann mit einer derartigen Vorrichtung auch eine Art Nachrieselsperre ausgebildet werden, mit der Verschmutzungen durch nachrieselnde Produkte, wie beispielsweise Trockenzucker oder Aromapulver, in einen Ausgabebereich eines Getränks verhindert werden kann.

Der Vorratsbehälter dient zur Lagerung des rieselfähigen Produkts und kann austauschbar an der Dosiereinrichtung angeordnet sein. Bevorzugt kann der Vorratsbehälter geöffnet und wieder befüllt werden.

Die Dosiereinrichtung kann unterschiedliche sowie vorbestimmbare Mengen des rieselfähigen Produkts zum Abgabeelement befördern. Dadurch kann eine gewünschte Menge an beispielsweise Trockenzucker oder sonstigen rieselfähigen Produkten in den Getränkebehälter gelangen. Das rieselfähige Produkt kann beispielsweise allein durch die Schwerkraft in Richtung des Abgabeelements gelangen, da die Dosiereinrichtung bevorzugt oberhalb des Abgabeelements angeordnet ist.

Es ist weiterhin denkbar, dass zwischen der Dosiereinrichtung und dem Abgabeelement eine Fördereinheit angeordnet ist, beispielsweise ein Fallrohr oder Ähnliches. Durch dieses kann das rieselfähige Produkt platziert in das Abgabeelement befördert werden. Bevorzugt stehen die Fördereinheit und das Abgabeelement nicht in direktem Kontakt, sodass das Abgabeelement bezüglich der Fördereinheit frei beweglich ist.

Das bewegbare Abgabeelement dient zur Abgabe des rieselfähigen Produkts in den Getränkebehälter und stellt daher ein Element dar, das direkt oberhalb des Getränkebehälters bei Ausgabe eines Getränks angeordnet ist. Das Abgabeelement ist in der Abgabeposition direkt über dem Getränkebehälter angeordnet. In dieser Position kann das rieselfähige Produkt dem Getränkebehälter zugeführt werden. Dabei kann es sich auch um verschiedene rieselfähige Produkte in verschiedenen Mengen handeln, die dem Getränkebehälter zugeführt werden.

Bevorzugt erfolgt zunächst die Abgabe des rieselfähigen Produkts in den Getränkebehälter, bevor Flüssigkeit in den Getränkebehälter eingefüllt wird. Die Abgabe des rieselfähigen Produkts erfolgt über das Abgabeelement, Flüssigkeit wird bevorzugt über ein davon verschiedenes Ausgabeelement in den Getränkebehälter eingefüllt. Während beiden Vorgängen ist der Getränkebehälter bevorzugt unverändert auf derselben Position im Getränkezubereitungsautomat angeordnet.

Vorteilhafterweise ist das Abgabeelement während der Zuführung von Flüssigkeit in den Getränkebehälter in der Warteposition angeordnet. Die Warteposition ist daher zumindest in horizontaler Richtung versetzt zur Abgabeposition angeordnet, sodass das Abgabeelement vor aufsteigender Feuchtigkeit bzw. aufsteigenden Dampf aus den Getränkebehälter geschützt ist, wenn der Getränkebehälter unverändert in dem Getränkezubereitungsautomat verbleibt.

Wenn das Abgabeelement in der Warteposition angeordnet ist, kann es bezüglich der Abgabeposition in horizontaler und/oder vertikaler Richtung versetzt angeordnet sein. Ebenso kann das Abgabeelement in der Warteposition bezüglich der Abgabeposition verdreht angeordnet sein, sodass zumindest ein Abschnitt des Abgabeelements, beispielsweise eine untere Öffnung, in der Warteposition in horizontaler Richtung versetzt zur Abgabeposition angeordnet ist. Als Warteposition ist daher eine Position zu verstehen, in der das Abgabeelement relativ zur Abgabeposition verschoben und/oder verdreht angeordnet sein kann.

Der Getränkezubereitungsautomat stellt insbesondere einen Heißgetränkezubereitungsautomat dar, beispielsweise einen Kaffeeautomat. Ebenso kann es sich um einen Kaltgetränkezubereitungsautomat handeln, beispielsweise zur Herstellung von Softdrinks mit beispielsweise kohlensäurehaltigen Getränken.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform kann das Abgabeelement eine untere Öffnung umfassen, wobei zumindest die untere Öffnung in der Warteposition zumindest in horizontaler Richtung versetzt zur Abgabeposition positioniert sein kann. Vorteilhafterweise kann das Abgabeelement als längliches Element ausgebildet sein, wobei die untere Öffnung bei einer Bewegung, insbesondere Rotationsbewegung, des Abgabeelements von der Abgabeposition in die Warteposition die längste Wegstrecke zurücklegt.

Gemäß einer vorteilhaften Ausführungsform kann das Abgabeelement unabhängig von der Dosiereinrichtung bewegbar sein. Vorteilhaft ist dadurch eine Bewegung des Abgabeelements unabhängig von der Dosiereinrichtung möglich. Da die Dosiereinrichtung bevorzugt an einer Position verbleibt und lediglich das Abgabeelement bewegt wird, kann innerhalb des Getränkezubereitungsautomats Bauraum eingespart werden.

Gemäß einer Weiterbildung kann das Abgabeelement punktuell gelagert und um die punktuelle Lagerung schwenkbar sein.

Auf diese Weise kann das Abgabeelement als eine Art Pendel ausgebildet sein, wobei eine Öffnung des Abgabeelements, die zur Abgabe des rieselfähigen Produkts nach unten ausgerichtet ist, bei einer Bewegung in die Warteposition die größte Wegstrecke zurückgelegt. Dadurch kann sichergestellt werden, dass die Öffnung in der Warteposition vor aufsteigendem Dampf bzw. aufsteigender Feuchtigkeit geschützt ist. Eine Bewegung des Abgabeelements von der Abgabeposition in die Warteposition kann demnach eine pendelnde Bewegung sein. Die Pendelbewegung kann in eine beliebige Raumrichtung erfolgen. Beispielsweise kann die Öffnung des Abgabeelements um eine vertikale Achse bewegt werden, die durch die punktuelle Lagerung verläuft.

Gemäß einer Ausführungsform kann das Abgabeelement um eine horizontale Achse verschwenkbar sein. Vorteilhaft ist auf diese Weise eine Bewegung des Abgabeelements in zumindest eine Raumrichtung möglich.

Gemäß einer vorteilhaften Ausführungsform kann das Abgabeelement als Trichter ausgebildet sein. Vorteilhaft ist auf diese Weise ein sicheres Befüllen des Abgabeelements mit der durch die Dosiereinrichtung dosierten Menge des rieselfähigen Produkts möglich. Der Trichter ist bevorzugt nach oben geweitet, sodass die untere Öffnung des Abgabeelements, die vor Feuchtigkeit geschützt werden soll, einen geringeren Durchmesser als eine obere Öffnung aufweist, in die das rieselfähige Produkt eingeführt wird.

Erfindungsgemäß umfasst die Vorrichtung ein bewegbares Positionierungselement, dessen Positionsveränderung eine Veränderung der Position des beweglichen Abgabeelements bewirkt. Auf diese Weise kann das Abgabeelement von der Abgabeposition in die Warteposition bewegt werden. Das Positionierungselement kann beispielsweise eine lineare Bewegung oder eine Schwenkbewegung durchführen, und das Abgabeelement zur Seite drücken. Dadurch wird verhindert, dass aufsteigende Feuchtigkeit in bzw. an das Abgabeelement gelangt und sich dort abgelagert.

Gemäß einer besonders bevorzugten Ausführungsform kann das Positionierungselement als eine Art Schieber ausgebildet sein, und eine horizontale Bewegung und/oder eine Schwenkbewegung durchführen. Vorteilhafterweise ist das Positionierungselement auf einer Schiene angeordnet.

Erfindungsgemäß umfasst das Positionierungselement ein Ausgabeelement, dass zu Ausgabe eine Flüssigkeit zur Getränkeherstellung dient. Vorteilhaft kann dadurch direkt nach der Abgabe des rieselfähigen Produktes mit der restlichen Zubereitung des Getränks gestartet werden.

Gemäß einer Weiterbildung können das Positionierungselement und das Abgabeelement als separate Bauteile ausgebildet sein. Auf diese Weise ist eine freie und relative Bewegung des Positionierungselements gegenüber dem Abgabeelement möglich. Das Abgabeelement kann beispielsweise auf eine Bewegung des Positionierungselements reagieren, in dem es beliebig ausgelenkt wird.

Gemäß einer Ausführungsform kann das bewegbare Positionierungselement eine Kontaktfläche aufweisen, mit welcher das Positionierungselement mit dem Abgabeelement kontaktierbar ist, wobei die Kontaktfläche unterhalb einer Lagerposition des Abgabeelements angeordnet ist, wenn das Positionierungselement das Abgabeelement kontaktiert. Vorteilhaft ist auf diese Weise ein Auslenken des Abgabeelements möglich, insbesondere wenn das Abgabeelement pendelartig gelagert ist.

Bei einer vorteilhaften Ausführungsform kann die Lagerposition als Fixpunkt ausgebildet sein, der zumindest eine Verdrehung des Abgabeelements um eine horizontale Achse durch den Fixpunkt ermöglicht. Vorteilhafterweise kann dadurch der Bereich des Abgabeelements, der am nahesten in Richtung des Getränkebehälters angeordnet ist, am weitesten ausgelenkt werden.

Gemäß einer vorteilhaften Ausführungsform kann die Warteposition zumindest teilweise außerhalb eines Einflussbereichs eines Umfangs des Getränkebehälters angeordnet sein. Vorteilhafterweise kann dadurch zumindest die untere Öffnung des Abgabeelements vor Feuchtigkeit und Verschmutzung geschützt werden.

Gemäß einer vorteilhaften Ausführungsform kann das Abgabeelement in der Warteposition geneigt angeordnet sein, wobei zumindest die untere Öffnung des Abgabeelements gegenüber einer horizontalen Ebene geneigt angeordnet ist. Auf diese Weise kann eine Konzentration durch aufsteigenden Dampf bzw. aufsteigender Feuchtigkeit in der unteren Öffnung vermieden werden.

Gemäß einer vorteilhaften Ausführungsform kann die Dosiereinrichtung eine halbkreisförmige Öffnung an einer Position umfassen, an der die Dosiereinrichtung den Vorratsbehälter kontaktiert. Vorteilhafterweise kann dadurch eine Nachrieselsperre ausgebildet werden, die ein Nachrieseln von rieselfähigem Produkt aus dem Vorratsbehälter nach einer gewünschten Dosierung bzw. Dosierabgabe verhindert.

Gemäß einer Weiterbildung kann die Dosiereinrichtung ein Ventilkolben umfassen. Der Ventilkolben kann elektrisch angetrieben sein und in Verbindung mit der halbkreisförmigen Querschnittsöffnung die Nachrieselsperre ausbilden. Vor Ausgabe eines Getränks kann in einem Getränkerezept ein rieselfähiges Produkt aus dem Vorratsbehälter durch die halbkreisförmige Öffnung dosiert abgegeben werden. Entsprechend kann mittels eines magnetisch oder motorisch angetriebenen Ventilkolbens die halbkreisförmige Öffnung geöffnet bzw. wieder geschlossen werden. Während einer Dosierung kann das rieselfähige Produkt so die Dosiereinrichtung in gezielter Menge verlassen. Vorteilhafterweise kann dadurch ein Nachrieseln aus dem Vorratsbehälter nach einer Dosierabgabe und damit ein Verschmutzen durch nachrieselndes Produkt in den Getränkebehälter verhindert werden.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine Ausführungsform einer Vorrichtung in eine isometrische Darstellung;
- Fig. 2: eine Schnittdarstellung der Ausführungsform nach Fig. 1;
- Fig. 3: eine weitere Schnittdarstellung der Ausführungsform nach Fig. 1.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

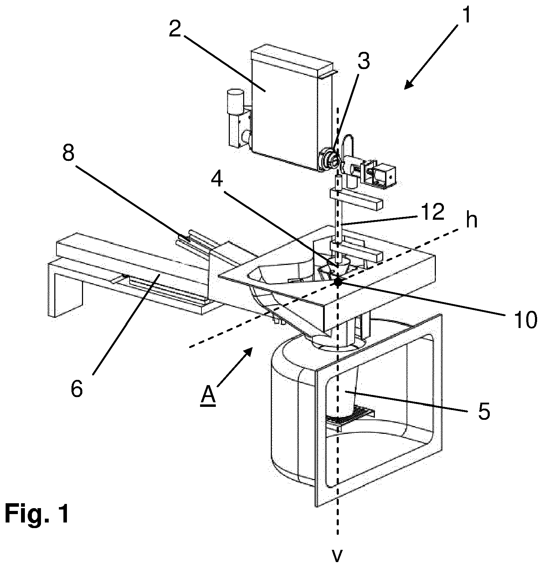

Fig. 1 zeigt eine Ausführungsform einer Vorrichtung 1 in eine isometrische Darstellung. Die komplett dargestellte Vorrichtung 1 kann beispielsweise innerhalb eines Gehäuses eines Getränkezubereitungsautomats angeordnet sein. Im oberen Bereich der Darstellung ist ein Vorratsbehälter 2 angeordnet, der zur Lagerung von rieselfähigem Produkt dient. Der Vorratsbehälter 2 kann abnehmbar und/oder auffüllbar sein. Es ist ebenso denkbar, dass der Vorratsbehälter 2 außerhalb des Gehäuses des Getränkezubereitungsautomats angeordnet ist.

Am Vorratsbehälter 2 ist eine Dosiereinrichtung 3 angeordnet, die eine bestimmte Menge des rieselfähigen Produkts aus dem Vorratsbehälter 2 ausgeben kann. Unterhalb der Dosiereinrichtung 3 ist ein bewegbares Abgabeelement 4 angeordnet. Durch das Abgabeelement 4 wird das rieselfähige Produkt in einen Getränkebehälter 5 befördert.

In dieser Ausführungsform ist zwischen der Dosiereinrichtung 3 und dem Abgabeelement 4 eine Fördereinheit 12 angeordnet, die als Fallrohr ausgebildet ist. Dadurch wird eine direkte Beförderung von der Dosiereinrichtung 3 zum Abgabeelement 4 gewährleistet.

Auf Höhe des Abgabeelements 4 ist ein bewegbares Positionierungselement 6 angeordnet das als Schieber ausgebildet ist und eine lineare Bewegung und/oder eine Schwenkbewegung ausführen kann. Durch die Bewegung des Positionierungselements 6 kann folglich das Abgabeelement 4 um eine Lagerposition 10 geschwenkt bzw. bewegt werden. Dies kann beispielsweise um eine horizontale Achse h und/oder eine vertikale Achse v erfolgen, welche die Lagerposition 10 schneiden. Dabei kann sich das Abgabeelement 4 pendelartig bewegen und beispielsweise nur punktuell gelagert sein.

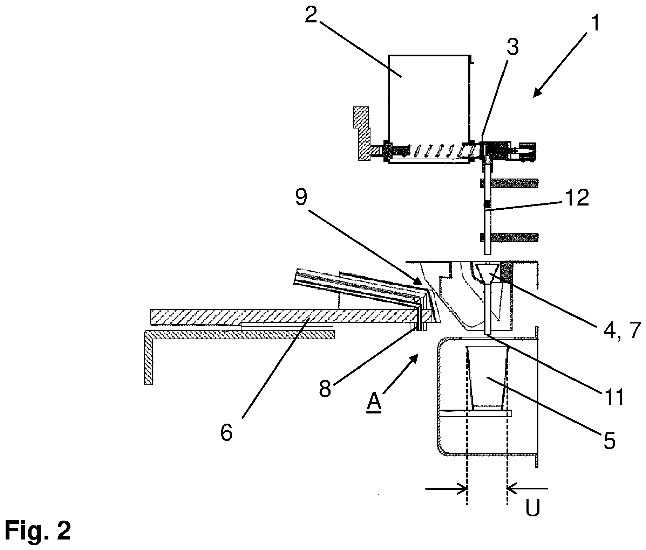

Fig. 2 zeigt eine Schnittdarstellung der Ausführungsform nach Fig. 1. Diese Darstellung zeigt einen Zustand, in welchen das Abgabeelement 4 in einer Abgabeposition A angeordnet ist. Das Abgabeelement 4 ist vertikal ausgerichtet, sodass rieselfähiges Produkt, das über den Vorratsbehälter 2, die Dosiereinrichtung 3 und die Fördereinheit 12 in das Abgabeelement 4 gelangt, in den Getränkebehälter 5 allein durch die Schwerkraft befördert werden kann. Das Abgabeelement 4 ist als Trichter 7 ausgebildet. In der dargestellten Abgabeposition A ist eine Kontaktfläche 9 des Positionierungselements 6 nicht in Kontakt mit dem Abgabeelement 4.

In Fig. 2 ist weiterhin erkennbar, dass die Dosiereinrichtung 3 bzw. die Fördereinheit 12 nicht mit dem Abgabeelement 4 in Kontakt stehen. Dadurch können sich die Dosiereinrichtung 3 und das Abgabeelement 4 frei und relativ zueinander bewegen.

Die Schnittdarstellung durch das Positionierungselement 6 zeigt, dass innerhalb des Positionierungselements 6 ein Ausgabeelement 8 angeordnet ist, das zur Beförderung einer Flüssigkeit in den Getränkebehälter 5 dient. In der Abgabeposition A ist das Ausgabeelement 8 nicht über dem Getränkebehälter 5 angeordnet.

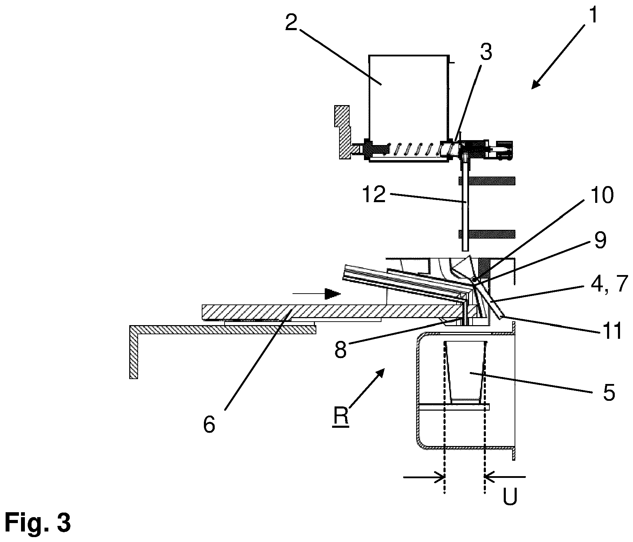

Fig. 3 zeigt eine weitere Schnittdarstellung der Ausführungsform nach Fig. 1. Die Darstellung zeigt die Warteposition R, in welcher das Positionierungselement 6 direkt über dem Getränkebehälter 5 angeordnet ist. In dieser Position kann über das Ausgabeelement 8 Flüssigkeit in den Getränkebehälter 5 befördert werden.

Die Warteposition R wird erreicht, indem das Positionierungselement 6 in Pfeilrichtung in Richtung des Abgabeelements 4 bewegt wird. Indem die Kontaktfläche 9 des Positionierungselements 6 mit dem Abgabeelement 4 in Kontakt kommt, wird das Abgabeelement 4 in die Warteposition R bewegt. In dieser Ausführungsform ist das Abgabeelement 4 punktuell gelagert. Eine Lagerposition 10 bildet einen Fixpunkt aus, um welchen das Abgabeelement 4 verdreht bzw. geschwenkt werden kann. Die Lagerposition 10 liegt knapp oberhalb der Kontaktfläche 9. Dadurch wird bei Kontakt des Abgabeelements 4 mit dem Positionierungselement 6 das Abgabeelement 4 pendelartig bewegt, sodass die untere Öffnung 11 zumindest horizontal verschoben wird.

In der dargestellten Ausführungsform liegt die untere Öffnung 11 außerhalb eines Umfangs U des Getränkebehälters 5. Zumindest die Öffnung 11 liegt damit außerhalb des aus den Getränkebehälter 5 aufsteigenden heißen Dampfs bzw. aufsteigender Feuchtigkeit. Die Öffnung 11 sowie das Innere des Abgabeelements 4 können so vor Kondensation geschützt werden. Eine Verschmutzung in bzw. am Abgabeelement 4 durch Rückstände des rieselfähigen Produkts in Kombination mit der Kondensation durch Feuchtigkeit kann so vermieden werden. Insbesondere in Kombination mit der Nachrieselsperre, durch die ein Nachrieseln des rieselfähigen Produkts in das Abgabeelement 4 vermieden wird, kann eine langlebige sowie hygienische Vorrichtung bereitgestellt werden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Abweichend von der dargestellten Ausführungsform kann die Vorrichtung zum Beispiel auch ohne Fördereinheit 12 ausgebildet sein. In einer derartigen Ausführungsform kann das rieselfähige Produkt direkt von der Dosiereinrichtung 3 in das Abgabeelement 4 befördert werden.

Weiterhin sind andere geometrische Ausgestaltungen des Abgabeelements 4, beispielsweise als rohrförmige Element oder Trichterform, möglich.

Das bewegbare Positionierelement 6 kann vorteilhaft nach der Flüssigkeitsabgabe in der vorderen Position bleiben und somit die unter Öffnung 11 des Abgabeelements 4 solange in der Warteposition R, und somit außerhalb der Reichweite aufsteigenden Dampfes aus dem befüllten Getränkebehälter 5, halten bis der Getränkebehälter 5 vom Konsumenten entnommen wurde.

### Bezugszeichenliste

- 1: Vorrichtung
- 2: Vorratsbehälter
- 3: Dosiereinrichtung
- 4: Abgabeelement
- 5: Getränkebehälter
- 6: bewegbares Positionierungselement/Schieber
- 7: Trichter
- 8: Ausgabeelement
- 9: Kontaktfläche
- 10: Lagerposition
- 11: untere Öffnung
- 12: Fördereinheit

- A: Abgabeposition
- R: Warteposition
- h: horizontale Achse
- v: vertikale Achse

## Patentansprüche

1. Vorrichtung (1) zur Abgabe eines rieselfähigen Produkts für oder in einem Getränkezubereitungsautomaten,
mit einem Vorratsbehälter (2) zur Lagerung des rieselfähigen Produkts,
mit einer Dosiereinrichtung (3) zur Dosierung des im Vorratsbehälter (2) gelagerten rieselfähigen Produkts,
mit einem bewegbaren Abgabeelement (4) zur Abgabe des von der Dosiereinrichtung (3) dosierten rieselfähigen Produkts in einen Getränkebehälter (5), wobei das Abgabeelement (4) von einer Abgabeposition (A) in eine Warteposition oder Ruheposition (R) und zurück bewegbar ist und wobei die Warteposition bzw. Ruheposition (R) zumindest in horizontaler Richtung versetzt zur Abgabeposition (A) positioniert ist,
**gekennzeichnet durch** ein bewegbares Positionierungselement (6), dessen Positionsveränderung eine Veränderung der Position des beweglichen Abgabeelements (4) bewirkt, wobei das Positionierungselement (6) ein Ausgabeelement (8) umfasst, das zur Ausgabe einer Flüssigkeit dient.

2. Vorrichtung nach Anspruch 1,
**dadurch gekennzeichnet,**
**dass** das Abgabeelement (4) eine untere Öffnung (11) umfasst, wobei zumindest die untere Öffnung (11) in der Warteposition bzw. Ruheposition (R) zumindest in horizontaler Richtung versetzt zur Abgabeposition (A) positioniert ist.

3. Vorrichtung nach einem der vorstehenden Ansprüche, **dadurch gekennzeichnet,**
**dass** das Abgabeelement (4) unabhängig von der Dosiereinrichtung (3) bewegbar ist.

4. Vorrichtung nach einem der vorstehenden Ansprüche, **dadurch gekennzeichnet,**
**dass** das Abgabeelement (4) punktuell gelagert und um die punktuelle Lagerung verschwenkbar ist.

5. Vorrichtung nach einem der vorstehenden Ansprüche, **dadurch gekennzeichnet,**
**dass** das Abgabeelement (4) um eine horizontale Achse (h) verschwenkbar ist.

6. Vorrichtung nach einem der vorstehenden Ansprüche, **dadurch gekennzeichnet,**
**dass** das Abgabeelement (4) als Trichter (7) ausgebildet ist.

7. Vorrichtung nach einem der vorstehenden Ansprüche, **dadurch gekennzeichnet,**
**dass** das Positionierungselement (6) als eine Art Schieber ausgebildet ist und dazu ausgebildet ist, eine horizontale Bewegung und/oder eine Schwenkbewegung durchzuführen, und/oder
**dass** das Positionierungselement (6) und das Abgabeelement (4) als separate Bauteile ausgebildet sind.

8. Vorrichtung nach einem der vorstehenden Ansprüche, **dadurch gekennzeichnet,**
**dass** das bewegbare Positionierungselement (6) eine Kontaktfläche (9) aufweist, mit welcher das Positionierungselement (6) mit dem Abgabeelement (4) kontaktierbar ist, wobei die Kontaktfläche (9) unterhalb einer Lagerposition (10) des Abgabeelements (4) angeordnet ist, wenn das Positionierungselement (6) das Abgabeelement (4) kontaktiert.

9. Vorrichtung nach Anspruch 8,
**dadurch gekennzeichnet,**
**dass** die Lagerposition (10) als Fixpunkt ausgebildet ist, der zumindest eine Verdrehung des Abgabeelements (4) um eine horizontale Achse (h) durch den Fixpunkt ermöglicht.

10. Vorrichtung nach einem der vorstehenden Ansprüche, **dadurch gekennzeichnet,**
**dass** die Warteposition bzw. die Ruheposition (R) zumindest außerhalb eines Einflussbereichs eines Umfangs (U) des Getränkebehälters (5) angeordnet sind.

11. Vorrichtung nach einem der vorstehenden Ansprüche, **dadurch gekennzeichnet,**
**dass** das Abgabeelement (4) in der Warteposition bzw. in der Ruheposition (R) geneigt angeordnet ist, wobei zumindest eine untere Öffnung (11) des Abgabeelements (4) gegenüber einer horizontalen Ebene geneigt angeordnet ist.

12. Vorrichtung nach einem der vorstehenden Ansprüche, **dadurch gekennzeichnet,**
**dass** die Dosiereinrichtung (3) eine halbkreisförmige Öffnung an einer Position umfasst, an der die Dosiereinrichtung (3) den Vorratsbehälter (2) kontaktiert.

13. Vorrichtung nach Anspruch 12,
**dadurch gekennzeichnet,**
**dass** die Dosiereinrichtung (3) einen Ventilkolben umfasst, welcher zum Verschließen der halbkreisförmigen Öffnung der Dosiereinrichtung (3) ausgebildet ist.

14. Getränkezubereitungsautomat, insbesondere Heißgetränkezubereitungsautomat, umfassend eine Vorrichtung nach einem der vorstehenden Ansprüche.

## Claims

1. Device (1) for dispensing a free-flowing product for or in a beverage preparation machine,
having a storage container (2) for storing the pourable product,
having a metering device (3) for metering the free-flowing product that is stored in the storage container (2) ,
having a movable dispensing element (4) for dispensing the free-flowing product that is metered by the metering device (3) into a beverage container (5), wherein the dispensing element (4) can be moved from a dispensing position (A) into a waiting position or rest position (R) and back, and wherein the waiting position or rest position (R) is positioned offset at least in the horizontal direction with respect to the dispensing position (A),
**characterised by**
a movable positioning element (6), the position change of which causes a change in the position of the movable dispensing element (4), wherein the positioning element (6) comprises a dispensing element (8) that is used so as to dispense a liquid.

2. Device according to claim 1,
**characterised in that**
the dispensing element (4) comprises a lower opening (11), wherein at least the lower opening (11) is positioned offset at least in the horizontal direction with respect to the dispensing position (A) in the waiting position or rest position (R).

3. Device according to one of the preceding claims, **characterised in that**
the dispensing element (4) can be moved independently of the metering device (3).

4. Device according to one of the preceding claims, **characterised in that**
the dispensing element (4) is mounted in a punctiform manner and can be pivoted about the punctiform mounting.

5. Device according to one of the preceding claims, **characterised in that**
the dispensing element (4) can be pivoted about a horizontal axis (h).

6. Device according to one of the preceding claims, **characterised in that**
the dispensing element (4) is configured as a funnel (7).

7. Device according to one of the preceding claims, **characterised in that**
the positioning element (6) is configured as a type of slide and is configured so as to perform a horizontal movement and/or a pivoting movement, and/or
that the positioning element (6) and the dispensing element (4) are configured as separate components.

8. Device according to one of the preceding claims, **characterised in that**
the movable positioning element (6) comprises a contact surface (9), by means of which the positioning element (6) can be contacted with the dispensing element (4), wherein the contact surface (9) is arranged below a storage position (10) of the dispensing element (4) when the positioning element (6) contacts the dispensing element (4).

9. Device according to claim 8, **characterised in that** the storage position (10) is configured as a fixed point, which enables at least one rotation of the dispensing element (4) about a horizontal axis (h) through the fixed point.

10. Device according to one of the preceding claims, **characterised in that**
the waiting position or the rest position (R) are arranged at least outside a region of influence of a circumference (U) of the beverage container (5).

11. Device according to one of the preceding claims, **characterised in that**
the dispensing element (4) is arranged inclined in the waiting position or in the rest position (R), wherein at least one lower opening (11) of the dispensing element (4) is arranged inclined with respect to a horizontal plane.

12. Device according to one of the preceding claims, **characterised in that**
the metering device (3) comprises a semicircular opening at a position at which the metering device (3) contacts the storage container (2).

13. Device according to claim 12, **characterised in that** the metering device (3) comprises a valve piston, which is configured so as to close the semicircular opening of the metering device (3).

14. Automatic beverage preparation machine, in particular automatic hot beverage preparation machine, comprising a device according to one of the preceding claims.

## Revendications

1. Dispositif (1) de distribution d'un produit pouvant s'écouler pour ou dans un automate de préparation de boisson,
comportant un réservoir de stockage (2) pour stocker le produit pouvant s'écouler,
comportant un dispositif de dosage (3) pour doser le produit pouvant s'écouler stocké dans le réservoir de stockage (2),
comportant un élément de distribution déplaçable (4) pour distribuer le produit pouvant s'écouler dosé par le dispositif de dosage (3) dans un récipient à boisson (5), dans lequel l'élément de distribution (4) est déplaçable d'une position de distribution (A) à une position d'attente ou une position de repos (R) et vice versa, et dans lequel la position d'attente ou la position de repos (R) est positionnée de manière décalée au moins dans une direction horizontale par rapport à la position de distribution (A),
**caractérisé par**
un élément de positionnement déplaçable (6) dont le changement de position entraîne un changement de la position de l'élément de distribution déplaçable (4), dans lequel l'élément de positionnement (6) comprend un élément de distribution (8) qui sert à distribuer un liquide.

2. Dispositif selon la revendication 1,
**caractérisé en ce que**
l'élément de distribution (4) comprend une ouverture inférieure (11), dans lequel au moins l'ouverture inférieure (11) est positionnée dans la position d'attente ou la position de repos (R), de manière décalée au moins dans la direction horizontale par rapport à la position de distribution (A).

3. Dispositif selon l'une des revendications précédentes, **caractérisé en ce que**
l'élément de distribution (4) peut être déplacé indépendamment du dispositif de dosage (3).

4. Dispositif selon l'une des revendications précédentes, **caractérisé en ce que**
l'élément de distribution (4) est en appui de façon ponctuelle et peut pivoter autour de l'appui ponctuel.

5. Dispositif selon l'une des revendications précédentes, **caractérisé en ce que**
l'élément de distribution (4) peut pivoter autour d'un axe horizontal (h).

6. Dispositif selon l'une des revendications précédentes, **caractérisé en ce que**
l'élément de distribution (4) est réalisé sous la forme d'un entonnoir (7).

7. Dispositif selon l'une des revendications précédentes, **caractérisé en ce que**
l'élément de positionnement (6) est réalisé comme une sorte de coulisseau et est conçu pour réaliser un mouvement horizontal et/ou un mouvement de pivotement, et/ou que
l'élément de positionnement (6) et l'élément de distribution (4) sont réalisés sous forme de composants séparés.

8. Dispositif selon l'une des revendications précédentes, **caractérisé en ce que**
l'élément de positionnement déplaçable (6) comprend une surface de contact (9) avec laquelle l'élément de positionnement (6) peut être en contact avec l'élément de distribution (4), dans lequel la surface de contact (9) est agencée en dessous d'une position d'appui (10) de l'élément de distribution (4) lorsque l'élément de positionnement (6) est en contact avec l'élément de distribution (4).

9. Dispositif selon la revendication 8,
**caractérisé en ce que**
la position d'appui (10) est réalisée sous la forme d'un point fixe qui permet au moins une rotation de l'élément de distribution (4) autour d'un axe horizontal (h) passant par le point fixe.

10. Dispositif selon l'une des revendications précédentes, **caractérisé en ce que**
la position d'attente ou la position de repos (R) sont agencées au moins à l'extérieur d'une zone d'influence d'une circonférence (U) du récipient à boisson (5).

11. Dispositif selon l'une des revendications précédentes, **caractérisé en ce que**
l'élément de distribution (4) est agencé de manière inclinée dans la position d'attente ou dans la position de repos (R), dans lequel au moins une ouverture inférieure (11) de l'élément de distribution (4) est agencée de manière inclinée par rapport à un plan horizontal.

12. Dispositif selon l'une des revendications précédentes, **caractérisé en ce que**
le dispositif de dosage (3) comprend une ouverture semi-circulaire à une position où le dispositif de dosage (3) est en contact avec le réservoir de stockage (2).

13. Dispositif selon la revendication 12,
**caractérisé en ce que**
le dispositif de dosage (3) comprend un piston de soupape qui est formé de manière à fermer l'ouverture semi-circulaire du dispositif de dosage (3).

14. Automate de préparation de boisson, en particulier automate de préparation de boisson chaude, comprenant un dispositif selon l'une des revendications précédentes.
